(19) **Europäisches Patentamt / European Patent Office / Office européen des brevets**

(11) **EP 3 607 103 B1**

(12) # EUROPÄISCHE PATENTSCHRIFT

(45) Veröffentlichungstag und Bekanntmachung des Hinweises auf die Patenterteilung:
**02.06.2021 Patentblatt 2021/22**

(21) Anmeldenummer: **18726332.2**

(22) Anmeldetag: **05.04.2018**

(51) Int Cl.:
**C22C 21/00** $^{(2006.01)}$

(86) Internationale Anmeldenummer:
**PCT/EP2018/058806**

(87) Internationale Veröffentlichungsnummer:
**WO 2018/185259 (11.10.2018 Gazette 2018/41)**

(54) **AUSGANGSWERKSTOFF, DESSEN VERWENDUNG UND ADDITIVES FERTIGUNGSVERFAHREN MIT DIESEM AUSGANGSWERKSTOFF**

ADDITIVE PRODUCTION METHOD, AND STARTING MATERIAL FOR SAME

PROCÉDÉ DE FABRICATION ADDITIVE ET MATÉRIAU DE BASE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2017 EP 17165133**

(43) Veröffentlichungstag der Anmeldung:
**12.02.2020 Patentblatt 2020/07**

(73) Patentinhaber:
• **AMAG casting GmbH**
  **5282 Braunau am Inn-Ranshofen (AT)**
• **Audi AG**
  **85045 Ingolstadt (DE)**

(72) Erfinder:
• **KAUFMANN, Helmut**
  **5280 Braunau (AT)**
• **FRAGNER, Werner**
  **5271 Moosbach (AT)**
• **SUPPAN, Helmut**
  **5280 Braunau (AT)**

• **SPIERINGS, Adriaan, Bernardus**
  **9300 Wittenbach (CH)**
• **UGGOWITZER, Peter, J.**
  **8913 Ottenbach (CH)**
• **SCHUBERT, Andreas**
  **74177 Bad Frierichshall (DE)**
• **HUMMEL, Marc**
  **74363 Güglingen (DE)**

(74) Vertreter: **Jell, Friedrich**
  **Bismarckstrasse 9**
  **4020 Linz (AT)**

(56) Entgegenhaltungen:
**EP-A1- 0 366 134    US-A1- 2003 156 968**

• **BAREKAR N S ET AL: "Processing of Ultrafine-Size Particulate Metal Matrix Composites by Advanced Shear Technology", METALLURGICAL AND MATERIALS TRANSACTIONS A, SPRINGER-VERLAG, NEW YORK, Bd. 40, Nr. 3, 17. Januar 2009 (2009-01-17), Seiten 691-701, XP019696522, ISSN: 1543-1940**

**Beschreibung**

Technisches Gebiet

Die Erfindung betrifft ein additives Fertigungsverfahren und einen Ausgangswerkstoff auf Al-Mg-Basis oder Al-Mg-Si-Basis oder Al-Zn-Basis oder Al-Si-Basis in Form von Pulver oder Draht für ein additives Fertigungsverfahren.

Stand der Technik

Um die mechanische Festigkeit von direktgenerierten Formkörpern, beispielsweise Bauteilen, die mit Hilfe eines additiven pulverbettbasierten Fertigungsverfahrens herstellten werden, zu erhöhen, ist es aus dem Stand der Technik bekannt (DE102007018123A1), als Ausgangswerkstoff für dieses additive Fertigungsverfahren Pulver oder Draht mit einer Al-Mg-Basis bzw. Al-Mg-Sc-Basis (AlMg4,6Sc1,4) zu verwenden. Obwohl die kornfeinende Wirkung von Scandium bekannt ist - welche Kornfeinung auch einer Heißrissbildung bzw. Warmrissbildung am Bauteil entgegenwirken kann -, ist es mit derartigen Pulvern nicht möglich, ein geringes Maß an Erstarrungsheißrissbildung am Bauteil sicherzustellen - welche Problematik auch beim Laserschweißen bekannt ist. Bekannte pulverbettbasierte additive Fertigungsverfahren führen daher zu einer erheblichen Prozessunsicherheit, welche derzeit nur durch eine geeignete Legierungsauswahl sowie engen Prozessfenstern verringerbar ist. Diese Umstände schränken also das Anwendungsgebiet von additiven Fertigungsverfahren ein.

Ähnliches ist auch von anderen Ausgangswerkstoffen, beispielsweise auf Al-Mg-Si-Basis oder Al-Zn-Basis oder Al-Si-Basis, bekannt.

Darstellung der Erfindung

Die Erfindung hat sich daher die Aufgabe gestellt, einen Ausgangswerkstoff auf Al-Mg-Basis oder Al-Mg-Si-Basis oder Al-Zn-Basis oder Al-Si-Basis in Form von Pulver oder Draht für ein, insbesondere pulverbettbasiertes, additives Fertigungsverfahren zur Verfügung zu stellen, welches nicht nur in der am Formkörper oder Bauteil erreichbaren mechanischen Eigenschaften vorteilhaft ist, sondern auch die Gefahr einer Heißrissbildung verringern kann.

Die Erfindung löst die gestellte Aufgabe hinsichtlich des Ausgangswerkstoffs nach den Merkmalen des Anspruchs 1.

Hohe mechanische Eigenschaften, beispielsweise Härte, sowie eine geringe Neigung zur Heißrissbildung können sichergestellt werden, wenn der Gehalt von Mangan (Mn) von maximal 0,9 Gew.-% und der Gehalt von Eisen von mindestens 0,5 Gew.-% des Ausgangswerkstoffs auf Al-Mg-Basis oder Al-Mg-Si-Basis oder Al-Zn-Basis oder Al-Si-

$$(\text{Gew.-\% Mn}) > A + \frac{0,15}{(\text{Gew.-\% Fe})} \text{ mit } A = 2000 * \left(\frac{\text{TLfcc}}{575} - 1\right)^4 \text{ und TLfcc}$$

Basis die Ordnungsrelation

= 660 - 6,6*(Gew.-% Si) - 5,3*(Gew.-% Mg) - 3,6*(Gew.-% Cu) - 2*(Gew.-% Zn) erfüllt.

Erfindungsgemäß kann durch diese Grenzen in der Komposition der Legierung garantiert werden, dass sich bei der Gefügeausbildung während des, insbesondere pulverbettbasierten, additiven Fertigungsverfahrens die Fe/Mn-haltige Phase vor der Al-Matrixphase des Ausgangswerkstoffs ausscheidet, wodurch eine feinere Gefügeausbildung erreicht werden kann. Dies überraschend trotz des vergleichsweise hohen Gehalts an Eisen und/oder Mangan - welcher hohe Gehalt nach gängiger Fachmeinung grobe intermetallische Ausscheidungsphasen bildet und damit die mechanischen Eigenschaften am Formkörper oder Bauteil negativ beeinflusst. Außerdem konnte festgestellt werden, dass bei Einhaltung der Ordnungsrelation und unter Berücksichtigung der inhärent hohen Abkühlgeschwindigkeit während des, insbesondere pulverbettbasierten, additiven Fertigungsverfahrens die Legierungselemente Eisen und/oder Mangan eine besonders hohe rekristallisationshemmende Wirkung auf das Gefüge entfalten können - was die Gefahr einer Erstarrungsheißrissbildung und auch von Porenbildung am Formkörper oder Bauteil erheblich reduzieren kann.

Fe und/oder Mn können zudem auch zur Festigkeitssteigerung am Formkörper oder Bauteil beitragen und damit die mechanischen Eigenschaften weiter verbessern. Im Gegensatz zum Stand der Technik kann mit dem erfindungsgemäßen Ausgangswerkstoff sohin eine besonders hohe Prozesssicherheit im additiven Fertigungsverfahren gewährleistet werden - womit dieses Verfahren auch vielseitig anwendbar ist.

Die Ordnungsrelation kann gegebenenfalls durch die optionalen Legierungselemente Silizium (Si) und/oder Magnesium (Mg) und/oder Kupfer (Cu) und/oder Zink (Zn) ergänzt werden. Zudem kann die Legierung optional 0,1 bis 2 Gew.-% Scandium (Sc) und/oder Erbium (Er), optional 0,1 bis 3 Gew.-% Lithium (Li), optional 0 bis 2 Gew.-% Nickel (Ni) und optional 0 bis 1 Gew.-% Silber (Ag), Beryllium (Be), Cobalt (Co), Chrom (Cr), Hafnium (Hf), Molybdän (Mo), Niob (Nb), Titan (Ti), Vanadium (V), Zirkon (Zr), Tantal (Ta), Yttrium (Y) einzeln oder in einer Kombination aufweisen. Als Rest weist der Ausgangswerkstoff Aluminium (Al) sowie herstellungsbedingt unvermeidbare Verunreinigungen auf. Im Allgemeinen wird erwähnt, dass der Ausgangswerkstoff Verunreinigungen mit jeweils maximal 0,05 Gew.-% und gesamt höchstens 0,15 Gew.-% aufweisen kann.

Die mechanischen Eigenschaften am Formkörper oder Bauteil können weiter erhöht werden, wenn der Ausgangswerkstoff mindestens 0,6 Gew.-% Fe aufweist. Mit einem Ausgangswerkstoff, aufweisend 0,8 bis 1,8 Gew.-% Fe und Mn, unter Einhaltung der Ordnungsrelation, kann das Gefüge weiter verfeinert werden. Auch mit einem Ausgangswerkstoff, aufweisend 0,8 bis 1,2 Gew.-% Fe, unter Einhaltung der Ordnungsrelation, kann das Gefüge weiter verfeinert werden - was am Formkörper oder Bauteil zu verbesserten mechanischen Eigenschaften und zu einem poren- und heißrissarmen Gefüge führen kann. Mit der Obergrenze von insbesondere bis 1,5 Gew.-% Fe, vorzugsweise bis 1,2 Gew.-% Fe kann die Gesamtmenge an intermetallischen Phasen beschränkt werden, um am Formkörper oder Bauteil eine vergleichsweise hohe Duktilität gewährleisten zu können. Diesbezüglich kann ein Optimum erreicht werden, wenn der Ausgangswerkstoff 1 Gew.-% Fe aufweist.

Indem die Summe der Legierungselemente Fe und Mn in der Komposition auf 0,7 bis 2,1 Gew.-% begrenzt wird, ist die Feinung des Korngefüges weiter verbesserbar, was die mechanischen Eigenschaften weiter erhöhen kann. Letzteres kann sich durch die engere Grenze mit 0,8 bis 1,6 Gew.-% Fe und Mn besonders verbessern.

Indem der Ausgangswerkstoff 0,05 bis 12 Gew.-% Si, 0,1 bis 8 Gew.-% Zn, 0,1 bis 7 Gew.-% Mg und 0,05 bis 2,5 Gew.-% Cu aufweist, kann das Gefüge in Hinblick auf Poren- und Heißrissfreiheit weiter optimiert werden.

Der Ausgangswerkstoff kann eine Al-Mg-Basis aufweisen, um ein, durch ein additives Fertigungsverfahren hergestelltes Bauteil mit exzellenter Korrosionsbeständigkeit und Temperaturbeständigkeit hinsichtlich mechanischer Eigenschaften, wie Dauerfestigkeit, Kriechen und Streckgrenze, zu ermöglichen. Hierzu empfiehlt sich ein Gehalt von 2 bis 7 Gew.-% Mg.

Weist der Ausgangswerkstoff lediglich 3 bis 5 Gew.-% Mg auf, kann beispielsweise die Bildung von beim Aufschmelzvorgang entstehenden Schmauchpartikel zurückgedrängt werden, wodurch die Gefahr einer negativen Beeinträchtigung des Korngefüges reduziert wird. Der erfindungsgemäße Ausgangswerkstoff kann damit auch zur Erhöhung der Reproduzierbarkeit des additiven Fertigungsverfahrens beitragen. Eine weitere Verbesserung der Heißrissfestigkeit ist mit 0,2 bis 2 Gew.-% Scandium (Sc) und/oder Erbium (Er) erreichbar - wobei sich hierfür im Zusammenhang mit den anderen Grenzen der Komposition 0,5 bis 1,5 Gew.-% Sc und/oder Er besonders auszeichnen kann.

Der Ausgangswerkstoff kann eine Al-Mg-Si-Basis mit Mg als auch Si als Legierungselementen aufweisen. Hierfür kann der Ausgangswerkstoff 0,3 bis 2 Gew.-% Mg und 0,05 bis 1,5 Gew.-% Si bewähren, um mechanische Eigenschaften zu erhöhen und die Heißrissanfälligkeit zu verringern.

Vorstehend genannte Eigenschaften können weiter verbessert werden, wenn der Ausgangswerkstoff 0,3 bis 1,2 Gew.-% Mg und 0,5 bis 1,2 Gew.-% Si aufweist. Zudem kann durch den vergleichsweise geringen Mg-Gehalt die Bildung der beim Aufschmelzvorgang entstehenden, nachteiligen Schmauchpartikel weiter zurückgedrängt werden.

Zur Ausbildung eines hochfesten Formkörpers oder Bauteils kann der Ausgangswerkstoff eine Al-Zn-Basis mit 1 bis 8 Gew.-% Zn, 1,0 bis 3 Gew.-% Mg und 0,05 bis 1,5 Gew.-% Si aufweisen. Da die erfindungsgemäßen Grenzen der Komposition hinsichtlich Fe/Mn eine Rissbildung besonders gut unterbindet, können sich auch aus solch einem Ausgangswerkstoff hergestellte Formkörper oder Bauteile speziell in ihrer Zugfestigkeit auszeichnen. Letzteres kann besonders erhöht werden, wenn der Ausgangswerkstoff 4,5 bis 8 Gew.-% Zn aufweist, um am Formkörper oder Bauteil hohe Zugfestigkeit sicherstellen zu können.

Der Ausgangswerkstoff kann neben einer Al-Si-Basis 5 bis 11 Gew.-% Si aufweisen, um am Formteil oder Bauteil Eigenspannungen und Rissneigung zu reduzieren. Vorzugsweise weist der Ausgangswerkstoff diesbezüglich 7 bis 10 Gew.-% Si auf.

Der erfindungsgemäße Ausgangswerkstoff kann sich besonders für ein additiven Fertigungsverfahren, insbesondere bei einem selektiven Laserschmelzen, eignen.

Zudem hat sich die Erfindung die Aufgabe gestellt, die Reproduzierbarkeit eines additiven Fertigungsverfahrens zu verbessern.

Die Erfindung löst die gestellte Aufgabe durch die Merkmale des Anspruchs 13.

Dadurch, dass der erfindungsgemäße Ausgangswerkstoff bei einem additiven Fertigungsverfahren zum Einsatz kommt, kann die Gefahr einer Erstarrungsheißrissbildung und auch von Porenbildung am Formkörper oder Bauteil erheblich reduziert werden - was zu einer erhöhten Reproduzierbarkeit am additiven Fertigungsverfahren führen kann.

Genanntes gilt besonders, wenn ein Formkörper oder Bauteil aus dem Ausgangswerkstoff durch dessen lokales Aufschmelzen mit einem Laserstrahl Schicht für Schicht erzeugt wird.

Dies kann beispielsweise bei einem pulverbettbasierten additiven Fertigungsverfahren der Fall sein, wie beispielsweise bei einem selektiven Laserschmelzen.

Wege zur Ausführung der Erfindung

Zum Nachweis der erzielten Effekte wurden aus verschiedenen Pulver-Ausgangswerkstoffen nach Tabelle 1 Formkörper mit Hilfe eines SLM (Selective Laser Melting) als pulverbettbasiertes additives Fertigungsverfahren hergestellt - und zwar mit einer kubischen Würfelform.

Tabelle 1: Pulver-Ausgangswerkstoffe 1 bis 9

| | Pulver-Ausgangswerkstoffe / Anteile in [Gew.-%] | | | | | | | | | |
|---|---|---|---|---|---|---|---|---|---|---|
| | Basis | Mg | Mn | Sc | Zr | Fe | Si | Cu | Zn | Cr |
| 1 | Al-Mg | 4,7 | 0,54 | 0,01 | 0,45 | 0,06 | | | | |
| 2 | Al-Mg | 4,9 | 0,55 | 0,51 | 0,47 | 0,14 | | | | |
| 3 | Al-Mg | 4,5 | 0,55 | 0,50 | 0,45 | 0,60 | | | | |
| 4 | Al-Si | 0,36 | | | | 0,11 | 10,1 | | | |
| 5 | Al-Si | 0,36 | 0,3 | | | 1 | 10,1 | | | |
| 6 | Al-Mg-Si | 1,15 | 0,65 | | | 0,22 | 0,75 | 0,35 | 0,2 | 0,1 |
| 7 | Al-Mg-Si | 1,18 | 0,65 | | | 0,95 | 0,79 | 0,38 | 0,2 | 0,1 |
| 8 | Al-Zn | 2,65 | 0,3 | | | 0,11 | 0,1 | 1,6 | 5,8 | 0,22 |
| 9 | Al-Zn | 2,66 | 0,3 | | | 1,1 | 0,1 | 1,6 | 5,9 | 0,23 |

Die Pulver-Ausgangswerkstoffe 1 bis 9 weisen zu den nach den Tabelle 1 angeführten Legierungselementen als Rest Al sowie herstellungsbedingt unvermeidbare Verunreinigungen mit jeweils maximal 0,05 Gew.-% und gesamt höchstens 0,15 Gew.-% auf. Die Obergrenze jeweils maximal 0,05 Gew.-% gilt auch für die in Tabelle 1 angeführten Legierungselementen mit fehlenden Gehaltsangaben.

Entsprechend der nach Anspruch 1 dargestellten Ordnungsrelation berechnen sich für die Pulver-Ausgangswerkstoffe 1 bis 9 die Parameter A und TLfcc und der Mindestgehalt an Mn folgendermaßen:

Tabelle 2: Parameter A, TLfcc und Mindestgehalt an Mn

| Pulver-Ausgangswerkstoffe | TLfcc | A | Mn [Gew.-%] > |
|---|---|---|---|
| 1 | 635 | 0,24 | 2,74 |
| 2 | 634 | 0,22 | 1,29 |
| **3** | 636 | 0,26 | **0,51** |
| 4 | 591 | 0,001 | 1,36 |
| **5** | 591 | 0,001 | **0,15** |
| 6 | 647 | 0,494 | 1,18 |
| **7** | 647 | 0,485 | **0,64** |
| 8 | 628 | 0,144 | 1,51 |
| **9** | 628 | 0,141 | **0,28** |

**Ausgangswerkstoff auf Al-Mg-Basis:**

Entsprechend der Tabelle 2 ist zu den Ausgangswerkstoffen 1, 2 und 3 auf Al-Mg Basis erkennbar, dass nur der Pulver-Ausgangswerkstoff 3 mit 0,55 Gew.-% Mn die Ordnungsrelation nach Anspruch 1 erfüllt, weil dessen Mn-Gehalt höher als jener nach Tabelle 2 geforderte Mn-Gehalt ist.

Die einzelnen Pulver-Ausgangswerkstoffe 1, 2 und 3 wurden beim selektiven Laserschmelzen jeweils mit einer Energiedichte (ED) von 200 J/mm3 vollständig aufgeschmolzen. Hierzu wurde ein Nd:YAG-Laser mit einer Laserleistung mit 200 bis 400 W, einem Strahldurchmesser von kleiner 1 mm, einer Abtastgeschwindigkeit/Scangeschwindigkeit von 250 mm/s und einer Pulverschichtdicke ($\Delta$z) von 30 $\mu$m verwendet. Die Formkörper wurden jeweils durch lokales Aufschmelzen des Pulver-Ausgangswerkstoffs 1, 2 bzw. 3 nach Tabelle 1 mit einer Körnung von ca. 30-45 $\mu$m Schicht für Schicht erzeugt. Für jede Schicht wurde der Spurabstand ($\Delta$ys) von 135 $\mu$m gewählt.

**Ausgangswerkstoff auf Al-Si-Basis:**

Entsprechend der, in der Tabelle 2 angeführten Pulver-Ausgangswerkstoffe 4 und 5 auf Al-Si Basis erfüllt einzig der Pulver-Ausgangswerkstoffe 5 mit 0,3 Gew.-% Mn die Ordnungsrelation nach Anspruch 1, weil dessen Mn-Gehalt höher als jener nach Tabelle 2 geforderte Mn-Gehalt ist.

Die einzelnen Pulver-Ausgangswerkstoffe 4 und 5 wurde beim selektiven Laserschmelzen je mit einem Yb:YAG-Laser mit einer Laserleistung mit 200 W und einer Abtastgeschwindigkeit/Scangeschwindigkeit von 500 mm/s erzeugt. Die Formkörper 4 und 5 wurden jeweils durch lokales Aufschmelzen des Pulver-Ausgangswerkstoffs nach Tabelle 1 mit einer Körnung von ca. 20-45 μm Schicht für Schicht erzeugt.

**Ausgangswerkstoff auf Al-Mg-Si-Basis:**

Entsprechend der Tabelle 2 ist zu den Ausgangswerkstoffen 6 und 7 auf Al-Mg-Si Basis erkennbar, dass nur der Pulver-Ausgangswerkstoff 7 mit 0,65 Gew.-% Mn die Ordnungsrelation nach Anspruch 1 erfüllt, weil dessen Mn-Gehalt höher als jener nach Tabelle 2 geforderte Mn-Gehalt ist.

Die einzelnen Pulver-Ausgangswerkstoffe 6 und 7 wurde beim selektiven Laserschmelzen je mit einem Yb:YAG-Laser mit einer Laserleistung mit 200 W und einer Abtastgeschwindigkeit/Scangeschwindigkeit von 500 mm/s erzeugt. Die Formkörper 6 und 7 wurden jeweils durch lokales Aufschmelzen des Pulver-Ausgangswerkstoffs nach Tabelle 1 mit einer Körnung von ca. 20-45 μm Schicht für Schicht erzeugt.

**Ausgangswerkstoff auf Al-Zn-Basis:**

Entsprechend der Tabelle 2 ist zu den Ausgangswerkstoffen 8 und 9 auf Al-Zn Basis erkennbar, dass nur der Pulver-Ausgangswerkstoff 9 mit 0,3 Gew.-% Mn die Ordnungsrelation nach Anspruch 1 erfüllt, weil dessen Mn-Gehalt höher als jener nach Tabelle 2 geforderte Mn-Gehalt ist.

Die einzelnen Pulver-Ausgangswerkstoffe 8 und 9 wurde beim selektiven Laserschmelzen je mit einem Yb:YAG-Laser mit einer Laserleistung mit 200 W und einer Abtastgeschwindigkeit/Scangeschwindigkeit von 500 mm/s erzeugt. Die Formkörper 8 und 9 wurden jeweils durch lokales Aufschmelzen des Pulver-Ausgangswerkstoffs nach Tabelle 1 mit einer Körnung von ca. 20-45 μm Schicht für Schicht erzeugt.

Die Pulver-Ausgangswerkstoffe 3, 5, 7 und 9 stellen sohin die erfindungsgemäßen Ausführungsformen dar.

Die damit an den Formkörpern erreichten Eigenschaften sind in nachstehender Tabelle 2 angeführt.

Tabelle 3: Kennwerte zu den aus den Pulver-Ausgangswerkstoffen hergestellten Formkörpern

| Formkörper aus Pulver-Ausgangswerkstoff | Härte HV3 | Rm [MPa] | A [%] | Porosität [%] | Heißrisse |
|---|---|---|---|---|---|
| 1 | 73 | 270 | 9,0 | > 4 | > 400 μm |
| 2 | 74 | 274 | 10,5 | > 3,5 | > 200 μm |
| **3** | **105** | **370** | **19,5** | **<2** | **< 30 μm** |
| | | | | | |
| 4 | 116 | 430 | 7 | > 0,5 | > 50 μm |
| **5** | **130** | **480** | **14** | **< 0,5** | **< 30 μm** |
| | | | | | |
| 6 | 108 | 315 | 17,5 | > 3 | > 350 μm |
| **7** | **116** | **340** | **23,5** | **< 1,5** | **< 100 μm** |
| | | | | | |
| 8 | 173 | 570 | 9,5 | > 4,5 | > 500 μm |
| **9** | **181** | **595** | **11,5** | **<3** | **< 180 μm** |

Die Formkörper aus den Pulver-Ausgangswerkstoffen 1 und 2 zeigten nach Tabelle 3 im Vergleich mit dem Formkörper aus dem erfindungsgemäßen Pulver-Ausgangswerkstoff 3 eine deutlich geringere Härte - was sich auch in einer verminderten Zugfestigkeit Rm und verminderten Bruchdehnung A widerspiegelt. Zudem konnte nachgewiesen werden, dass sich Formkörper aus dem Pulver-Ausgangswerkstoff 3 heißrissfrei durch das selektive Laserschmelzverfahren herstellen lassen. Außerdem zeigten diese Formköper eine geringere Porosität.

Die Porosität der Formkörper wurde nach dem archimedischen Prinzip (hydrostatische Waage) bestimmt.

Ein vergleichbares Ergebnis lässt sich auch in Bezug auf die Formkörper aus den Pulver-Ausgangswerkstoffen 4 und 5 bzw. den Pulver-Ausgangswerkstoffen 7 und 8 bzw. den Pulver-Ausgangswerkstoffen 8 und 9 beobachten. Auch hier zeigen sich die gleichen verbesserten Kennwerte am Formkörper aus dem Pulver-Ausgangswerkstoff 5 bzw. 8 bzw. 9 in Bezug auf Zugfestigkeit Rm, Bruchdehnung A, Heißrissfreiheit und Porosität.

Geeignete Laser für das additive Fertigungsverfahren sind, in Abhängigkeit von den Strahlungsabsorptionseigenschaften des eingesetzten Pulvers, außerdem CO2-Laser, Diodenlaser etc. Im Allgemeinen wird erwähnt, dass insbesondere als beispielsweise zu verstehen ist.

**Patentansprüche**

1. Ausgangswerkstoff auf Al-Mg-Basis oder Al-Mg-Si-Basis oder Al-Zn-Basis oder Al-Si-Basis in Form von Pulver oder Draht für ein additives Fertigungsverfahren,
   aufweisend

   von 0,5 bis 1,5    Gew.-% Eisen (Fe),
   maximal 0,9       Gew.-% Mangan (Mn),

   optional Silizium (Si), optional Magnesium (Mg), optional Kupfer (Cu), optional Zink (Zn),
   wobei der Gehalt von Mangan (Mn) und Eisen (Fe) die Ordnungsrelation

$$(\text{Gew.-\% Mn}) > A + \frac{0,15}{(\text{Gew.-\% Fe})}$$

   mit

$$A = 2000 * (\frac{\text{TLfcc}}{575} - 1)^4$$

$$\text{TLfcc} = 660 - 6{,}6*(\text{Gew.-\% Si}) - 5{,}3*(\text{Gew.-\% Mg}) - 3{,}6*(\text{Gew.-\% Cu}) - 2*(\text{Gew.-\% Zn})$$

   erfüllt,
   und optional aufweisend

   0,1 bis 2    Gew.-% Scandium (Sc) und/oder Erbium (Er),
   0,1 bis 3    Gew.-% Lithium (Li),
   0 bis 2      Gew.-% Nickel (Ni),
   0 bis 1      Gew.-% Silber (Ag), Beryllium (Be), Cobalt (Co), Chrom(Cr), Hafnium (Hf), Molybdän (Mo), Niob (Nb), Titan (Ti), Vanadium (V), Zirkon (Zr), Tantal (Ta), Yttrium (Y) einzeln oder in einer Kombination

   und als Rest Aluminium (Al) sowie herstellungsbedingt unvermeidbare Verunreinigungen.

2. Ausgangswerkstoff nach Anspruch 1, **dadurch gekennzeichnet, dass** der Ausgangswerkstoff

   mindestens 0,6            Gew.-% Fe,
   insbesondere 0,8 bis 1,2  Gew.-% Fe,
   insbesondere 1            Gew.-% Fe,

   aufweist.

**3.** Ausgangswerkstoff nach Anspruch 1 oder 2, **dadurch gekennzeichnet, dass** der Ausgangswerkstoff

| | |
|---|---|
| 0,7 bis 2,1 | Gew.-% Fe und Mn, |
| insbesondere 0,8 bis 1,8 | Gew.-% Fe und Mn, |
| insbesondere 0,8 bis 1,6 | Gew.-% Fe und Mn, |

aufweist.

**4.** Ausgangswerkstoff nach Anspruch 1, 2 oder 3, **dadurch gekennzeichnet, dass** der Ausgangswerkstoff

| | |
|---|---|
| 0,05 bis 12 | Gew.-% Si, |
| 0,1 bis 8 | Gew.-% Zn, |
| 0,1 bis 7 | Gew.-% Mg und |
| 0,05 bis 2,5 | Gew.-% Cu |

aufweist.

**5.** Ausgangswerkstoff nach einem der Ansprüche 1 bis 4, **dadurch gekennzeichnet, dass** der Ausgangswerkstoff eine Al-Mg-Basis mit

| | |
|---|---|
| 2 bis 7 | Gew.-% Mg |

aufweist.

**6.** Ausgangswerkstoff nach Anspruch 5, **dadurch gekennzeichnet, dass** der Ausgangswerkstoff

| | |
|---|---|
| 3 bis 5 | Gew.-% Mg und |
| 0,2 bis 2 | Gew.-% Sc und/oder Er, |
| insbesondere 0,5 bis 1,5 | Gew.-% Sc und/oder Er, |

aufweist.

**7.** Ausgangswerkstoff nach einem der Ansprüche 1 bis 4, **dadurch gekennzeichnet, dass** der Ausgangswerkstoff eine Al-Mg-Si-Basis mit

| | |
|---|---|
| 0,3 bis 2 | Gew.-% Mg und |
| 0,05 bis 1,5 | Gew.-% Si |

aufweist.

**8.** Ausgangswerkstoff nach Anspruch 7, **dadurch gekennzeichnet, dass** der Ausgangswerkstoff

| | |
|---|---|
| 0,3 bis 1,2 | Gew.-% Mg und |
| 0,5 bis 1,2 | Gew.-% Si |

aufweist.

**9.** Ausgangswerkstoff nach einem der Ansprüche 1 bis 4, **dadurch gekennzeichnet, dass** der Ausgangswerkstoff eine Al-Zn-Basis mit

| | |
|---|---|
| 1 bis 8 | Gew.-% Zn, |
| 1,0 bis 3 | Gew.-% Mg und |
| 0,05 bis 1,5 | Gew.-% Si |

aufweist.

10. Ausgangswerkstoff nach Anspruch 9, **dadurch gekennzeichnet, dass** der Ausgangswerkstoff

<div align="center">

4,5 bis 8    Gew.-% Zn

</div>

aufweist.

11. Ausgangswerkstoff nach einem der Ansprüche 1 bis 4, **dadurch gekennzeichnet, dass** der Ausgangswerkstoff eine Al-Si-Basis mit

<div align="center">

5 bis 11            Gew.-% Si,
insbesondere 7 bis 10    Gew.-% Si,

</div>

aufweist.

12. Verwendung eines Ausgangswerkstoffs nach einem der Ansprüche 1 bis 11 bei einem additiven Fertigungsverfahren, insbesondere bei einem selektiven Laserschmelzen.

13. Additives Fertigungsverfahren mit einem Ausgangswerkstoff nach einem der Ansprüche 1 bis 11.

14. Additives Fertigungsverfahren nach Anspruch 13, **dadurch gekennzeichnet, dass** ein Formkörper oder Bauteil aus dem Ausgangswerkstoff durch dessen lokales Aufschmelzen mit einem Laserstrahl Schicht für Schicht erzeugt wird.

15. Additives Fertigungsverfahren nach Anspruch 13 oder 14, nämlich selektives Laserschmelzen.

**Claims**

1. An Al-Mg-based or Al-Mg-Si-based or Al-Zn-based or Al-Si-based starting material in the form of a powder or wire for an additive manufacturing process,
having

<div align="center">

from 0.5 to 1.5    wt% iron (Fe),
at most 0.9      wt% manganese (Mn),

</div>

optionally silicon (Si), optionally magnesium (Mg), optionally copper (Cu), optionally zinc (Zn),
wherein the content of manganese (Mn) and iron (Fe) fulfills the ordering relation

$$(\text{wt\% Mn}) > A + \frac{0.15}{(\text{wt\% Fe})}$$

with

$$A = 2000 * \left(\frac{\text{TLfcc}}{575} - 1\right)^4$$

$$\text{TLfcc} = 660 - 6.6*(\text{wt\% Si}) - 5.3*(\text{wt\% Mg}) - 3.6*(\text{wt\% Cu}) - 2*(\text{wt\% Zn}),$$

and optional having

<div align="center">

8

</div>

0.1 to 2 wt% scandium (Sc) and/or erbium (Er),
0.1 to 3 wt% lithium (Li),
0 to 2 wt% nickel (Ni),
0 to 1 wt% silver (Ag), beryllium (Be), cobalt (Co), chromium (Cr), hafnium (Hf), molybdenum (Mo), niobium (Nb), titanium (Ti), vanadium (V), zirconium (Zr), tantalum (Ta), yttrium (Y) individually or in a combination

and residual aluminum (Al) and inevitable manufacturing induced impurities.

2. The starting material according to claim 1, **characterized in that** the starting material has

at least 0.6 wt% Fe,
more particularly 0.8 to 1.2 wt% Fe,
more particularly 1 wt% Fe.

3. The starting material according to claim 1 or 2, **characterized in that** the starting material has

0.7 to 2.1 wt% Fe and Mn,
more particularly 0.8 to 1.8 wt% Fe and Mn,
more particularly 0.8 to 1.6 wt% Fe and Mn.

4. The starting material according to claim 1, 2, or 3, **characterized in that** the starting material has

0.05 to 12 wt% Si,
0.1 to 8 wt% Zn,
0.1 to 7 wt% Mg, and
0.05 to 2.5 wt% Cu.

5. The starting material according to one of claims 1 to 4, **characterized in that** the starting material is Al-Mg-based, with

2 to 7 wt% Mg.

6. The starting material according to claim 5, **characterized in that** the starting material contains

3 to 5 wt% Mg and
0.2 to 2 wt% Sc and/or Er,

more particularly 0.5 to 1.5 wt% Sc and/or Er.

7. The starting material according to one of claims 1 to 4, **characterized in that** the starting material is Al-Mg-Si-based, with

0.3 to 2 wt% Mg and
0.05 to 1.5 wt% Si.

8. The starting material according to claim 7, **characterized in that** the starting material contains

| 0.3 to 1.2 | wt% Mg and |
| 0.5 to 1.2 | wt% Si. |

9. The starting material according to one of claims 1 to 4, **characterized in that** the starting material is Al-Zn-based, with

| 1 to 8 | wt% Zn, |
| 1.0 to 3 | wt% Mg, and |
| 0.05 to 1.5 | wt% Si. |

10. The starting material according to claim 9, **characterized in that** the starting material contains

| 4.5 to 8 | wt% Zn. |

11. The starting material according to one of claims 1 to 4, **characterized in that** the starting material is Al-Si-based, with

| 5 to 11 | wt% Si, |
| more particularly 7 to 10 | wt% Si. |

12. A use of the starting material according to one of claims 1 to 11 in an additive manufacturing process, more particularly with a selective laser melting.

13. An additive manufacturing process with a starting material according to one of claims 1 to 11.

14. The additive manufacturing process according to claim 13, **characterized in that** a molded body or component is produced layer by layer from the starting material by locally melting it with a laser beam.

15. The additive manufacturing process according to claim 13 or 14, namely selective laser melting.

**Revendications**

1. Matériau de départ à base d'Al-Mg ou d'Al-Mg-Si ou d'Al-Zn ou d'Al-Si sous forme de poudre ou de fil pour un procédé de fabrication par addition de matière, contenant
de 0,5 à 1,5 % en poids de fer (Fe),
au maximum 0,9 % en poids de manganèse (Mn),
facultativement du silicium (Si), facultativement du magnésium (Mg), facultativement du cuivre (Cu), facultativement du zinc (Zn),
la teneur en manganèse (Mn) et en fer (Fe) satisfaisant la relation d'ordre

$$(\% \text{ en poids de Mn}) > A + \frac{0,15}{(\% \text{ en poids de Fe})}$$

où

$$A = 2000 * \left(\frac{TLfcc}{575} - 1\right)^4$$

TLfcc = 660 − 6,6*(% en poids de Si) − 5,3*(% en poids de Mg)

− 3,6*(% en poids de Cu) − 2*(% en poids de Zn),

et contenant facultativement

| de 0,1 à 2 | % en poids de scandium (Sc) et/ou d'erbium (Er), |
| de 0,1 à 3 | % en poids de lithium (Li), |
| de 0 à 2 | % en poids de nickel (Ni), |
| de 0 à 1 | % en poids d'argent (Ag), de béryllium (Be), de cobalt (Co), de chrome (Cr), d'hafnium (Hf), de molybdène (Mo), de niobium (Nb), de titane (Ti), de vanadium (V), de zirconium (Zr), de tantale (Ta), d'yttrium (Y), individuellement ou en combinaison |

et de l'aluminium (Al) pour le reste, ainsi que les impuretés de fabrication inévitables.

**2.** Matériau de départ selon la revendication 1, **caractérisé en ce qu'**il contient

| au moins 0,6 | % en poids de Fe, |
| en particulier de 0,8 à 1,2 | % en poids de Fe, |
| en particulier 1 | % en poids de Fe. |

**3.** Matériau de départ selon la revendication 1 ou 2, **caractérisé en ce qu'**il contient

| 0,7 à 2,1 | % en poids de Fe et de Mn, |
| en particulier de 0,8 à 1,8 | % en poids de Fe et de Mn, |
| en particulier de 0,8 à 1,6 | % en poids de Fe et de Mn. |

**4.** Matériau de départ selon la revendication 1, 2 ou 3, **caractérisé en ce qu'**il contient

| de 0,05 à 12 | % en poids de Si, |
| de 0,1 à 8 | % en poids de Zn, |
| de 0,1 à 7 | % en poids de Mg et |
| de 0,05 à 2,5 | % en poids de Cu. |

**5.** Matériau de départ selon l'une des revendications 1 à 4, **caractérisé en ce qu'**il contient une base d'Al-Mg avec

| de 2 à 7 | % en poids de Mg. |

**6.** Matériau de départ selon la revendication 5, **caractérisé en ce qu'**il contient

| de 3 à 5 | % en poids de Mg et |
| de 0,2 à 2 | % en poids de Sc et/ou d'Er, |
| en particulier de 0,5 à 1,5 | % en poids de Sc et/ou d'Er. |

**7.** Matériau de départ selon l'une des revendications 1 à 4, **caractérisé en ce qu'**il contient une base d'Al-Mg-Si avec

de 0,3 à 2 % en poids de Mg et
de 0,05 à 1,5 % en poids de Si.

**8.** Matériau de départ selon la revendication 7, **caractérisé en ce qu'**il contient

de 0,3 à 1,2 % en poids de Mg et
de 0,5 à 1,2 % en poids de Si.

**9.** Matériau de départ selon l'une des revendications 1 à 4, **caractérisé en ce qu'**il contient une base d'Al-Zn avec

de 1 à 8 % en poids de Zn,
de 1,0 à 3 % en poids de Mg et
de 0,05 à 1,5 % en poids de Si.

**10.** Matériau de départ selon la revendication 9, **caractérisé en ce qu'**il contient

de 4,5 à 8 % en poids de Zn.

**11.** Matériau de départ selon l'une des revendications 1 à 4, **caractérisé en ce qu'**il contient une base d'Al-Si avec

de 5 à 11 % en poids de Si.

en particulier de 7 à 10 % en poids de Si.

**12.** Utilisation d'un matériau de départ selon l'une des revendications 1 à 11 dans un procédé de fabrication par addition de matière, en particulier dans une fusion sélective par laser.

**13.** Procédé de fabrication par addition de matière avec un matériau de départ selon l'une des revendications 1 à 11.

**14.** Procédé de fabrication par addition de matière selon la revendication 13, **caractérisé en ce qu'**un moule ou une pièce faite du matériau de départ est produite couche après couche par fusion locale de celui-ci avec un faisceau laser.

**15.** Procédé de fabrication par addition de matière selon la revendication 13 ou 14, à savoir fusion sélective par laser.

**IN DER BESCHREIBUNG AUFGEFÜHRTE DOKUMENTE**

**In der Beschreibung aufgeführte Patentdokumente**

- DE 102007018123 A1